# EUROPEAN PATENT SPECIFICATION

(11) **EP 2 957 906 B1**
(45) Date of publication and mention of the grant of the patent: **03.04.2019**
(21) Application number: 14751550.6
(22) Date of filing: 07.02.2014
(51) Int. Cl.: G01N 29/24, G01N 29/04, G01N 29/22

(54) **ULTRASONIC PROBE**
ULTRASCHALLSONDE
SONDE ÉCHOGRAPHIQUE

(30) Priority: 14.02.2013 JP 2013026712; 28.10.2013 JP 2013223269
(43) Date of publication of application: 23.12.2015
(73) Proprietor: Kabushiki Kaisha Kobe Seiko Sho (Kobe Steel, Ltd.), Kobe-shi, Hyogo 651-8585 (JP)
(72) Inventor: WASA, Yasuhiro, Kobe-shi, Hyogo 651-2271 (JP)
(74) Representative: Müller-Boré & Partner Patentanwälte PartG mbB
(86) International application number: PCT/JP2014/052974
(87) International publication number: WO 2014/126023

(56) References cited:
- JP-A- H11 304 769
- JP-A- S60 142 248
- JP-A- 2001 153 847
- JP-A- 2002 005 907
- JP-A- 2004 361 352
- JP-A- 2006 349 486
- JP-A- 2007 010 637
- JP-A- 2011 529 177
- JP-A- 2012 127 812
- JP-B2- 4 770 386
- US-B2- 8 225 668

## Description

### Technical Field

The present invention relates to an ultrasonic probe for use in an ultrasonic test.

### Background Art

A ultrasonic test is a technique widely known as one method of nondestructive inspection that detects a physical defect, such as a crack or a void, and a metal structural defect (both defects simply referred to as defects) present inside an inspection object, such as a mechanical component or a structure, without destroying the inspection object. There are three ultrasonic test methods, namely, a transmission method, a pulse echo method, and a resonance method. Of these, the pulse echo method is a method that detects a defect inside an inspection object by detecting an echo of an ultrasonic pulse reflected by the defect inside the inspection object.

As techniques of performing a test in an inspection object by a pulse echo method, there are a plurality of test methods, for example, a vertical-beam method for performing a test inside an inspection object by using ultrasound traveling perpendicularly to a surface of the inspection object and an angle-beam method for performing a test inside an inspection object or on a surface of the inspection object by using ultrasound traveling obliquely to the surface of the inspection object. As a technique of performing a test near a surface of an inspection object, there is a surface method using surface ultrasound that propagates near the surface of the inspection object. In the surface method, surface ultrasound is transmitted from an ultrasonic probe, and reflected ultrasound that is reflected and returned by a defect present on a surface of an inspection object or under the surface is received by the ultrasonic probe, whereby a surface defect and an under-surface defect of the inspection object are detected.

Such an angle-beam method and an ultrasonic probe using the angle-beam method are disclosed in PTL 1.

The ultrasonic probe of PTL 1 is an ultrasonic probe for performing a test on a curved surface, in which an ultrasonic vibrator is provided on an inclined surface of a wedge member and a contact surface to touch a test body is shaped like a curved surface. This ultrasonic probe is characterized in that the ultrasonic vibrator is shaped like a spherical shell so that radiant ultrasound is focused on the contact surface.

PTL 1 describes that such an ultrasonic probe allows detection of defects while suppressing a contact surface echo even when a gap is formed between the probe and the test body.

Further, an ultrasonic probe that performs an ultrasonic test is disclosed in PTL 2.

The ultrasonic probe of PTL 2 is an ultrasonic probe for an ultrasonic tester including an element for transmitting ultrasound, an acoustic lens for propagating the ultrasound to a concave surface of an inspection object, and an element for receiving an echo of the ultrasound from the inspection object via the acoustic lens. In the ultrasonic probe of PTL 2, a surface of the acoustic lens facing the concave surface is shaped like a convex surface having a curvature radius within the range of 1/2 to 2/3 of a curvature radius of the concave surface. The element for transmitting the ultrasound and the element for receiving the echo are formed as array sensors, and the element arrangement direction of the transmitting and receiving array sensors extends along the center axis of a cylindrical shape that forms the convex surface of the acoustic lens shaped like a part of the cylindrical shape. Further, the acoustic lens is formed of such a material that the longitudinal wave sound velocity of the ultrasound is lower than the longitudinal wave sound velocity in the inspection object and higher than the longitudinal wave sound velocity of the ultrasound in an intermediate medium between the ultrasonic probe and the inspection object. Inside the acoustic lens, a sound insulating board for preventing propagation of sound is provided at a position to separate propagation paths of the transmitted ultrasound and the received echo.

In the ultrasonic probe of PTL 2, as illustrated in Fig. 13 of PTL 2, the shape of a vibrator and the shape of a wedge in the probe are convex to the test body in consideration of refraction of ultrasound at an interface with the test body. PTL 2 describes that, according to the structure of this ultrasonic probe, it is possible to cope with a problem of unstable scattering of incident ultrasound resulting from refraction caused by the difference between the sound velocity in the wedge of the contacted probe and the sound velocity in the test body when the surface of the test body is shaped like a curved surface, and to allow the acoustic field to be focused inside the test body.

### Citation List

### Patent Literature

PTL 1: Japanese Unexamined Patent Application Publication No. 2-73151
PTL 2: Japanese Patent No. 4770386

JP 2006 349486 A discloses an ultrasonic probe constituted so as to allow the ultrasonic beam to enter the inside of the recessed curved surface of the inspection target, from the recessed curved surface of the inspection target, to perform ultrasonic flaw detection of the inside of the recessed curved surface.

JP 2007 010637 A and US 8 225 668 B2 disclose an ultrasonic wave propagating method capable of propagating plate waves between a probe and a test piece despite variations in the thickness or the surface angle of a test piece, and an ultrasonic propagating device and an ultrasonic testing device using this method.

### Summary of Invention

### Technical Problem

As described above, while the spherical-shell-shaped ultrasonic vibrator in the ultrasonic probe applies ultrasound so that the ultrasound is focused on the surface of the test body serving as an inspection object in PTL 1, the applied ultrasound is a creeping wave that propagates on the surface of the inspection object. For this reason, it is difficult for the ultrasonic probe of PTL 1 to be used for detection of defects present inside the inspection object.

Defects inside the inspection object have various depths, and it is ideal to perform a high-precision test in a wide depth range. However, it is generally difficult for not only the ultrasonic probe of PTL 1 but also conventional ultrasonic probes to perform a high-precision test in a wide depth range. Particularly when the surface of the inspection object is a curved surface, applied ultrasound is refracted at the curved surface and is diffused (or dispersed) in the depth direction. Hence, it is more difficult to perform a high-precision test in the wide depth range.

As a technique of conducting a test on an inspection object having a curved surface, a phased array method using an ultrasonic probe in which vibrators are arranged in an array is widely known. However, the existing ultrasonic probe using the phased array method generally has a planar shape, and it is necessary to fill a wide space between the vibrators and the curved surface of the inspection object with a contact medium such as water. Hence, operability is not high, and the mechanism of the ultrasonic probe is complicated. Further, the total production cost of the apparatus including the ultrasonic probe becomes high, for example, because of the complicated mechanism of the ultrasonic probe and troublesome control of the vibrators arranged in the array.

The method of PTL 2 can focus the ultrasound on an arbitrary position inside the test body even when the test body has a curved shape. However, it is necessary to bring the probe and the curved interface of the test body into accurate contact with each other. If the probe tilts or a gap is formed between the probe and the test body during the test, the focusing condition of the ultrasound is disturbed. Not only in manual scanning but also in mechanical scanning, there is a great difficulty in scanning the curved probe so that the probe accurately follows the curved test body.

Further, if a gap is formed between the probe and the test body in transmission of ultrasound, the gap causes multireflection, and the transmitted wave varies in the terms of time. As a result, the sound pressure of the transmitted pulse decreases or a surface echo occurs for a long time. This enlarges the dead zone near the surface of the test body.

The present invention has been made in view of the above-described problems, and an object of the invention is to provide an ultrasonic probe in which, even when a surface of an inspected article to be inspected is a curved surface, the influence of refraction on the curved surface of ultrasound applied to the curved surface can be reduced and a surface echo on the curved surface can be suppressed.

### Solution to Problem

To achieve the above object, the present invention adopts an ultrasonic probe as defined in claim 1. Preferred embodiments are defined in the dependent claims.

An ultrasonic probe according to the present invention detects a defect inside an inspected article having a groove formed by a curved surface by transmitting ultrasound to the inspected article and receiving reflected ultrasound reflected inside the inspected article. The ultrasonic probe includes a transmitting part having a transmitting vibrator that transmits ultrasound toward the curved surface of the groove, and a receiving part having a receiving vibrator that receives reflected ultrasound reflected inside the inspected article and propagated to the curved surface. The transmitting vibrator forms a focal point of the transmitted ultrasound at a position corresponding to the curved surface of the groove or inside the inspected article directly under the curved surface in a cross section orthogonal to an extending direction of the groove, and the transmitting part and the receiving part are disposed to be adjacent to each other in the extending direction of the groove.

Here, the transmitting vibrator and the receiving vibrator are preferably disposed while being inclined with respect to the curved surface so that a facing angle formed by a transmitting surface included in the transmitting vibrator of the transmitting part and a receiving surface included in the receiving vibrator of the receiving part is an obtuse angle.

Further, the receiving surface of the receiving vibrator preferably forms a focal point of the received ultrasound at a position corresponding to the curved surface of the groove in the cross section orthogonal to the extending direction of the groove.

Further, the receiving surface of the receiving vibrator forms a focal point of the received ultrasound inside the inspected article under the curved surface of the groove in the cross section orthogonal to the extending direction of the groove.

Here, preferably, the receiving surface of the receiving vibrator is convex to a test surface to touch the inspected article, and the test surface is formed of such a material that an ultrasound propagation velocity on the test surface is lower than an ultrasound propagation velocity in the inspected article.

### Advantageous Effects of Invention

According to the ultrasonic probe of the present invention, even when the surface of the inspected article is a curved surface, the influence of refraction on the curved surface of ultrasound applied to the curved surface can be reduced, and a surface echo on the curved surface can be suppressed.

### Brief Description of Drawings

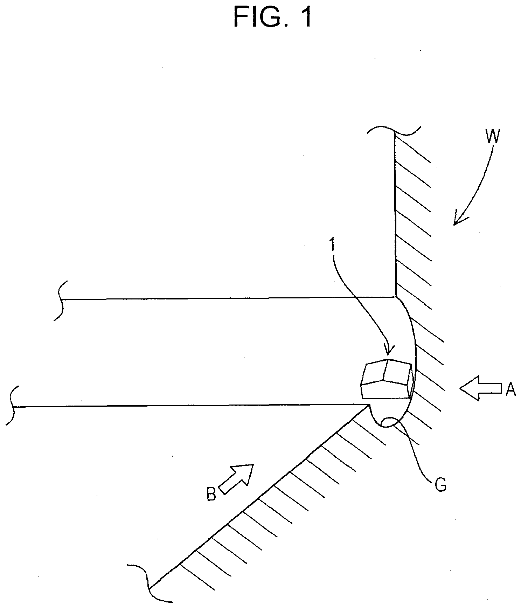

Fig. 1 is a schematic perspective view illustrating a state in which an ultrasonic probe according to an embodiment of the present invention touches a groove of an inspected article.

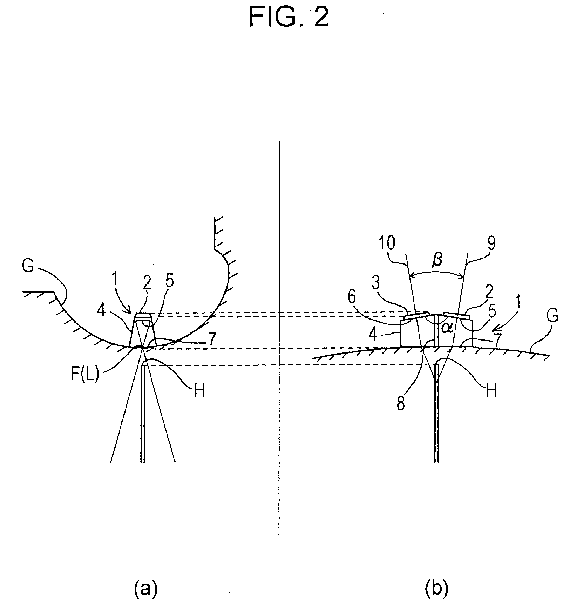

Figs. 2(a) and 2(b) are schematic views illustrating the structure of the ultrasonic probe according to the embodiment of the present invention, Fig. 2(a) illustrates a state in which the ultrasonic probe touches the inspected article, when viewed from a side of arrow A in Fig. 1 along an extending direction of the groove, and Fig. 2(b) illustrates the state of Fig. 2(a), when viewed from a side of arrow B of Fig. 1 orthogonal to the extending direction of the groove (arrow A).

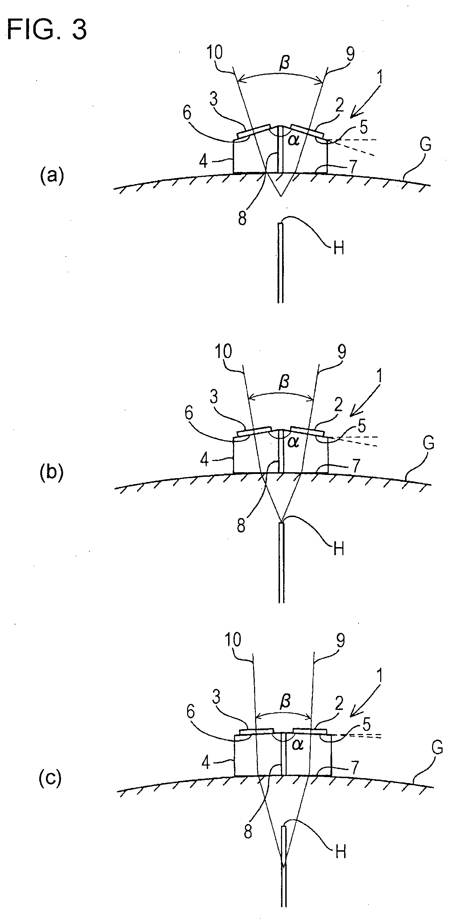

Figs. 3(a), (b), and (c) illustrate the differences of an intersection position of a transmission axis and a receiving axis when the facing angle is set at three angles, and respectively illustrate states in which the ultrasonic probe including a transmitting vibrator and a receiving vibrator is disposed at the different facing angles.

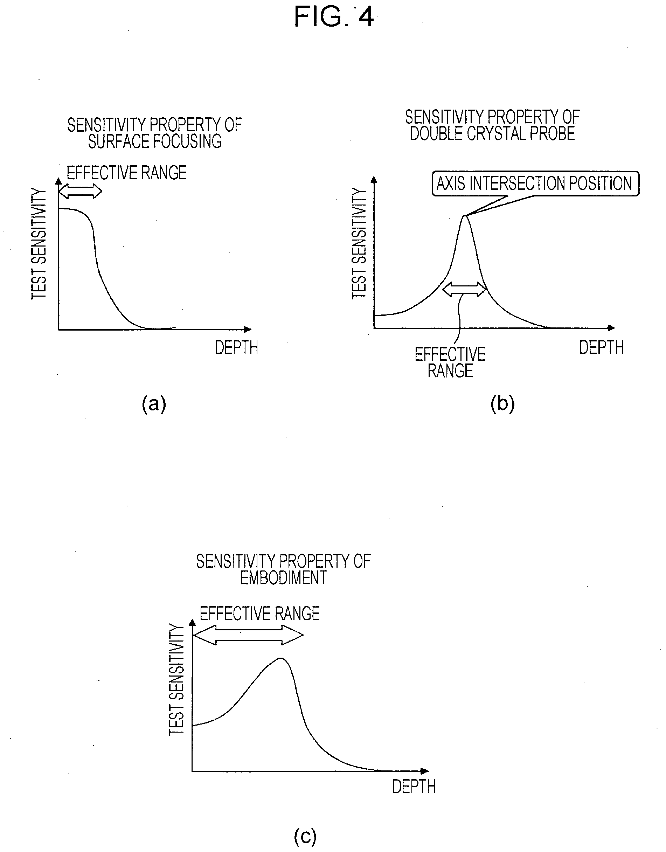

Figs. 4(a), 4(b), and 4(c) explain the sensitivity property of the ultrasonic probe of the embodiment, Fig. 4(a) shows the test sensitivity property of only surface focusing in which a focal line is formed on a test surface by a single vibrator, Fig. 4(b) shows the test sensitivity property of the structure of a double crystal probe, and Fig. 4(c) shows the test sensitivity property of a combination of the structure of surface focusing of Fig. 4(a) and the structure of the double crystal probe of Fig. 4(b).

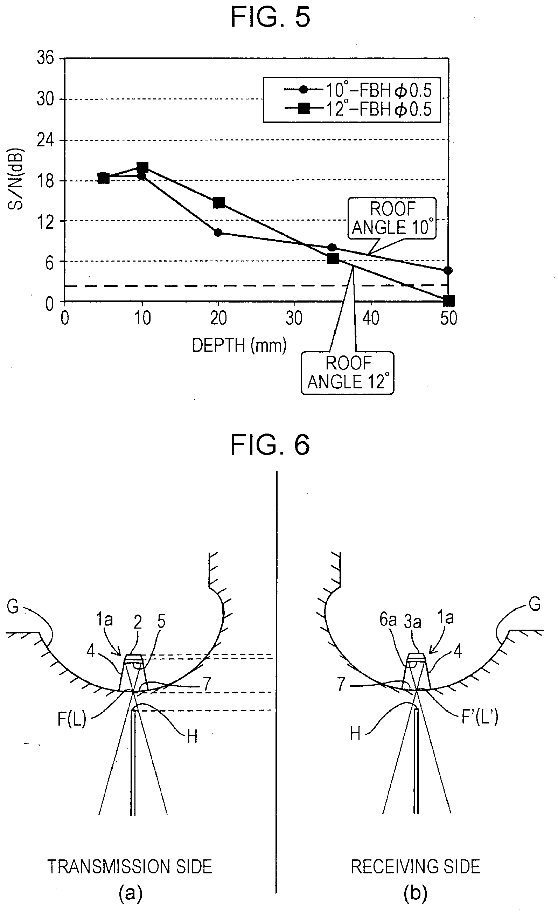

Fig. 5 is a graph of experimental results when detection test was conducted on flat bottoms of different depths with ultrasonic probes having different roof angles (facing angles).
Figs. 6(a) and 6(b) are schematic views illustrating the structure of an ultrasonic probe according to a second embodiment of the present invention, Fig. 6(a) is a schematic view illustrating the position and structure of the ultrasonic probe in a cross section on one side (transmission side), and Fig. 6(b) is a schematic view illustrating the position and structure of the ultrasonic probe in a cross section on the other side (receiving side).

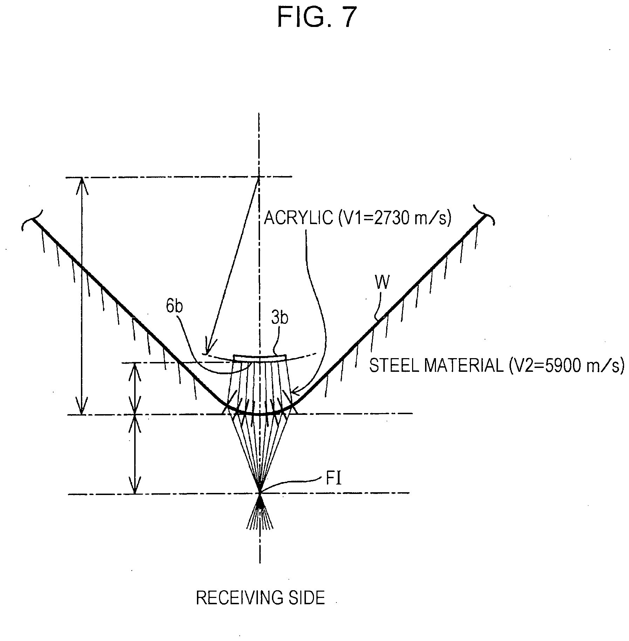

Fig. 7 is a conceptual view explaining the structure of a receiving part in an ultrasonic probe according to an example that is useful for understanding the invention.

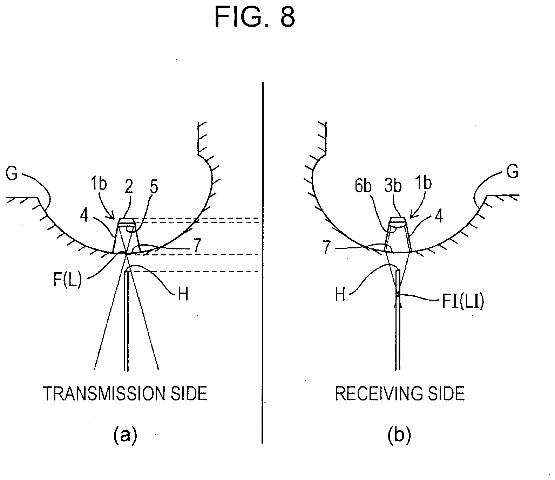

Figs. 8(a) and 8(b) are schematic views illustrating the structure of the ultrasonic probe of an example that is useful for understanding the invention, Fig. 8(a) is a schematic view illustrating the position and structure of the ultrasonic probe in a cross section on one side (transmission side), and Fig. 8(b) is a schematic view illustrating the position and structure of the ultrasonic probe in a cross section on the other side (receiving side).

### Description of Embodiments

Embodiments of the present invention will be described below with reference to the drawings.

The embodiments described below are specific embodiments of the present invention, and the specific embodiments do not limit the features of the present invention. Therefore, the technical scope of the present invention is not limited only to the disclosed contents of the embodiments.

### [First Embodiment]

An ultrasonic probe 1 according to this embodiment will be described with reference to Figs. 1 and 2.

Fig. 1 is a schematic perspective view illustrating a state in which the ultrasonic probe 1 according to this embodiment of the present invention touches a groove G, such as a fillet, formed in an inspected article W. Fig. 2 includes schematic views illustrating a structure in which the ultrasonic probe 1 is disposed on a curved surface of the groove G in the inspected article W. Fig. 2(a) is a schematic view illustrating the position and structure of the ultrasonic probe 1 in a cross section orthogonal to a longitudinal direction (also referred to as an extending direction) of the groove G. Fig. 2(b) is a schematic view illustrating the position and structure of the ultrasonic probe 1 in a cross section along the longitudinal direction (extending direction) of the groove G. That is, Fig. 2(a) is a view from a side of arrow A (view on arrow A) in Fig. 1, and Fig. 2(b) is a view from a side of arrow B (view on arrow B) in Fig. 1.

The ultrasonic probe 1 is connected to an ultrasonic tester (not illustrated) that causes a transmitting vibrator 2 to transmit ultrasound and a signal recording/processing device (not illustrated) to be described later, and transmits ultrasound to a surface of an inspected article W such as a mechanical component or a structure. Further, the ultrasonic probe 1 detects a defect that is present in the depth direction inside the inspected article W (a physical defect, such as a crack, and a metal structural defect) with high accuracy by receiving reflected ultrasound reflected by the defect inside the inspected article W. In particular, the ultrasonic probe 1 of this embodiment is suitable particularly for detection of a defect present in the depth direction under a surface of an inspected article W, such as a mechanical component or a structure, in which a concave groove, such as a fillet, is formed by a curved surface.

As illustrated in Figs. 2(a) and 2(b), the ultrasonic probe 1 includes a transmitting part having a transmitting vibrator 2 that transmits ultrasound toward the curved surface of the groove G, and a receiving part having a receiving vibrator 3 that receives reflected ultrasound reflected inside the inspected article W and propagated to the curved surface. The transmitting vibrator 2 is disposed to form a focal point F of transmitted ultrasound at a position corresponding to the curved surface of the groove G in a cross section (view on arrow A in Fig. 1) orthogonal to the longitudinal direction of the groove G. The transmitting part and the receiving part are disposed to be adjacent to each other in the longitudinal direction of the groove G.

The ultrasonic probe 1 includes the transmitting vibrator 2, the receiving vibrator 3, and a wedge (wedge member) 4. The transmitting vibrator 2 and the receiving vibrator 3 are held by the wedge 4. This ultrasonic probe 1 is connected to the ultrasonic tester and the signal recording/processing device, and touches the inspected article W to transmit ultrasound from the transmitting vibrator 2 to a surface of the inspected article W and to receive reflected ultrasound reflected from a defect or the like inside the inspected article W by the receiving vibrator 3 under the control of the ultrasonic tester. The signal recording/processing device connected to the ultrasonic probe 1 provides information about the presence or absence and position of a defect or the like inside the inspected article W on the basis of the reflected ultrasound received by the receiving vibrator 3.

The transmitting vibrator 2, the receiving vibrator 3, and the wedge 4 that constitute the ultrasonic probe 1 will be described in detail with reference to Figs. 2(a) and 2(b).

For example, the transmitting vibrator 2 of the ultrasonic probe 1 is configured by a composite vibrator that is formed by a piezoelectric element having a plurality of point sources for spherical waves. When a predetermined pulse voltage is applied, the transmitting vibrator 2 generates spherical waves with a frequency corresponding to the pulse voltage applied from the point sources. Since a plurality of spherical waves generated at the same timing from the transmitting vibrator 2 are combined into a single wave, the transmitting vibrator 2 transmits ultrasound toward the front of a surface where the point sources are disposed.

As illustrated in Fig. 2(a), in the transmitting vibrator 2 formed by the composite vibrator, a transmitting surface 5 that generates ultrasound is curved in a substantially arcuate shape such as to be concave to the surface of the inspected article W, and has a shape similar to a gutter or a half cylinder. Further, the transmitting surface 5 of the transmitting vibrator 2 is a concave surface having such a curvature that ultrasound transmitted from the transmitting surface 5 is focused on a position to which the ultrasound travels by a predetermined distance.

That is, the ultrasound transmitted from the transmitting surface 5 of the transmitting vibrator 2 shaped like a gutter or a half cylinder is focused on a substantially straight focal line L that is at a predetermined distance from the transmitting surface 5 and that extends in the longitudinal direction of the transmitting vibrator 2 perpendicular to a forming direction of the arc of the transmitting surface 5. In other words, as illustrated in Fig. 2(a), the ultrasound transmitted from the transmitting surface 5 of the transmitting vibrator 2 is applied to form a focal point F on the surface of the fillet (on the curved surface of the groove G), and then propagates in the inner side of the groove G.

Here, it can also be considered that the focal line L corresponds to a center axis of a cylinder, a column, or a cone (truncated cone) having a side surface whose part is formed by the transmitting surface 5 of the transmitting vibrator 2 shaped like a gutter or a half cylinder and that the focal point F corresponds to one point on the center axis.

For example, the receiving vibrator 3 is formed by a composite vibrator having a structure similar to that of the transmitting vibrator 2, and is curved in a substantially arcuate shape so that a receiving surface 6 for receiving ultrasound is a concave surface. The receiving vibrator 3 generates a voltage corresponding to the intensity and frequency of ultrasound received by the receiving surface 6.

While the receiving vibrator 3 may be formed by a composite vibrator shaped like a concave surface similarly to the transmitting vibrator 2, as described above, it may be formed, not by the composite vibrator, by shaping a planar piezoelectric element into a concave surface similarly to the transmitting vibrator 2.

In general, when the receiving vibrator 3 has a structure similar to that of the transmitting vibrator 2, it is possible to obtain high sensitivity and a high S/N ratio in receiving of reflected ultrasound reflected by the defect inside the inspected article W. However, the receiving vibrator 3 may be formed by a piezoelectric element concavely shaped in accordance with the material and shape of the inspected article W and desired receiving sensitivity and S/N ratio.

For example, the wedge 4 is a hollow housing formed of resin or glass and shaped like a substantially rectangular parallelepiped, and has, on a wall surface of the housing, a test surface 7 to touch the inspected article W. The wedge 4 constitutes the ultrasonic probe 1 by holding the transmitting vibrator 2 and the receiving vibrator 3 adjacent to each other at a position opposed to the test surface 7.

As illustrated in Fig. 2(b), the transmitting vibrator 2 and the receiving vibrator 3 are held via the wedge 4 formed of resin, such as acrylic resin, with the transmitting surface 5 and the receiving surface 6 facing toward the test surface 7. A space between the test surface 7, and the transmitting vibrator 2 and the receiving vibrator 3 is separated by the wall surface that forms the housing, and an acoustic isolation wall 8 is provided to partition (divide) this space into a transmitting wedge part on the side of the transmitting vibrator 2 and a receiving wedge part on the side of the receiving vibrator 3. The acoustic isolation wall 8 is provided substantially perpendicularly to the test surface 7, and performs shielding so that ultrasound in one space does not propagate to the other space. This acoustic isolation wall 8 prevents the receiving vibrator 3 from being affected by the transmitting vibrator 2 that transmits ultrasound.

The space between the test surface 7, and the transmitting vibrator 2 and the receiving vibrator 3 (transmitting space and receiving space) is filled with a contact medium serving as a substance that transfers ultrasound, for example, water, glycerin paste, or oil. Here, the test surface 7 of the wedge 4 is a curved face having a curvature substantially equal to or slightly smaller than the curvature of the groove G formed by the curved surface, and has a cylindrical face shape that is convex to the outside of the wedge 4.

The ultrasonic probe 1 touches the inspected article W so that the convex shape of the curved face of the test surface 7 corresponds to the concave shape of the curved surface of the groove G. That is, the ultrasonic probe 1 touches the groove G of the inspected article W so that a direction orthogonal to the radial direction of the cylindrical face shape of the test surface 7 extends in the extending direction of the groove G.

Referring to Fig. 2(a), the transmitting vibrator 2 is held at a position such that the focal line L on which ultrasound transmitted from the transmitting surface 5 is focused is provided on the test surface 7. Thus, in Fig. 2(a) serving as a cross-sectional view orthogonal to the extending direction of the groove G, ultrasound is transmitted from the transmitting surface 5 of the transmitting vibrator 2 to form the point (focal point F), on which the ultrasound is focused, on the curved surface of the groove G in contact with the test surface 7.

When the transmitted ultrasound is focused on the curved surface of the groove G, as illustrated in Fig. 2(a), it is possible to suppress nonuniform diffusion (or dispersion) in the depth direction of the ultrasound due to refraction of the applied ultrasound at the curved surface of the groove G. According to Fig. 2(a), the ultrasound propagated from the curved surface of the groove G into the inspected article W propagates toward a flat bottom H of a flat bottom hole (FBH) formed as a defect, while using the focal point F as a point sound source.

Here, the arrangement of the transmitting vibrator 2 and the receiving vibrator 3 will be described in more detail with reference to Fig. 2(b). Fig. 2(b) illustrates the structure of the ultrasonic probe 1 in the state of Fig. 2(a) in contact with the inspected article W, when viewed from a side perpendicular to the extending direction of the groove G.

As described above, the transmitting vibrator 2 and the receiving vibrator 3 are disposed with the acoustic isolation wall 8 being disposed therebetween while the transmitting surface 5 and the receiving surface 6 face toward the test surface 7 of the wedge 4. Further, the transmitting vibrator 2 is inclined so that the transmitting surface 5 faces toward a portion from the test surface 7 to the acoustic isolation wall 8, and the receiving vibrator 3 is also inclined so that the receiving surface 6 faces toward a portion from the test surface 7 to the acoustic isolation wall 8.

As illustrated in Fig. 2(b), the transmitting vibrator 2 and the receiving vibrator 3 are disposed in an inclined manner with respect to the curved surface of the groove G and the test surface 7 of the ultrasonic probe 1 so that a facing angle α formed by the transmitting surface 5 of the transmitting vibrator 2 and the receiving surface 6 of the receiving vibrator 3 becomes an obtuse angle. Here, the facing angle α is defined as follows.

First, for example, a transmission axis 9 perpendicularly penetrating the center position of the transmitting surface 5 of the transmitting vibrator 2 in the arc forming direction toward the focal line L is assumed. Similarly, a receiving axis 10 perpendicularly penetrating the center position of the receiving surface 6 of the receiving vibrator 3 in the arc forming direction toward the focal line L corresponding to the receiving surface 6 is assumed. The angle formed by the transmission axis 9 and the receiving axis 10 is designated as a roof angle β. When the receiving vibrator 3 is shaped like a flat plate, a receiving axis 10 perpendicularly penetrating the center position of the receiving surface 6 shaped like a flat plate in the widthwise direction and the longitudinal direction is assumed, and the angle formed by the transmission axis 9 and the receiving axis 10 is designated as a roof angle β.

When the roof angle β is determined in this way, the facing angle α formed by the transmitting surface 5 of the transmitting vibrator 2 and the receiving surface 6 of the receiving vibrator 3 is a value obtained by subtracting the roof angle β from 180° (facing angle α = 180°-roof angle β).

At this time, in Fig. 2(b), the transmitting vibrator 2 and the receiving vibrator 3 are disposed at positions corresponding to a roof when the wedge 4 is regarded as a building, and are inclined. The transmitting vibrator 2 and the receiving vibrator 3 are preferably disposed at such an inclination angle that the roof angle β is less than 90°. By setting the roof angle β less than 90° and setting the facing angle α at an obtuse angle, it is possible to realize an ultrasonic probe 1 that can detect defects present at various depths under the surface of the inspected article W.

At this time, the transmitting vibrator 2 and the receiving vibrator 3 are disposed to be inclined at the same angle with respect to the acoustic isolation wall 8 so that extensions of the transmission axis 9 and the receiving axis 10 intersect at one point (axis intersection point). By disposing the transmitting vibrator 2 and the receiving vibrator 3 in this way, as illustrated in Fig. 2(b), the transmission axis 9 and the receiving axis 10 intersect at one point at a certain depth inside the inspected article W even in consideration of refraction on the surface of the inspected article W.

The facing angle α and the roof angle β described above can be arbitrarily set according to the shape and material of the inspected article W. Since the position of the intersection point of the transmission axis 9 and the receiving axis 10 is changed by changing the facing angle α and the roof angle β, the position where the transmission axis 9 and the receiving axis 10 intersect inside the inspected article W can be set at various depths.

By thus disposing the transmitting vibrator 2 and the receiving vibrator 3 so that the transmission axis 9 and the receiving axis 10 intersect, the ultrasonic probe 1 can be configured such that the sensitivity is high particularly near the axis intersection point of the transmission axis 9 and the receiving axis 10. Therefore, the ultrasonic probe 1 having high sensitivity at a desired depth can be configured by setting the intersecting position of the transmission axis 9 and the receiving axis 10 at various depths.

Figs. 3(a), 3(b), and 3(c) illustrate differences in the position where the transmission axis 9 and the receiving axis 10 intersect when the facing angle α and the roof angle β are set in three ways. Figs. 3(a) to 3(c) illustrate states in which the ultrasonic probe 1 is disposed at the same position in the groove G of the inspected article W when the transmitting vibrator 2 and the receiving vibrator 3 are provided at different facing angles α and different roof angles β. The depth from the surface of the inspected article W and position of a flat bottom H of a flat bottom hole (FBH) formed as a defect inside the inspected article W directly under the ultrasonic probe 1 are the same in Figs. 3(a) to 3(c).

Fig. 3(a) illustrates a state in which the transmitting vibrator 2 and the receiving vibrator 3 are provided at a large roof angle β (or a small facing angle α). When the roof angle β is large (or when the facing angle α is small), the transmission axis 9 and the receiving axis 10 intersect at a relatively shallow position inside the inspected article W. At this time, since the transmission axis 9 and the receiving axis 10 intersect at a position shallower than the flat bottom H of the flat bottom hole, the depth where the sensitivity is the highest is shallower than the position of the defect present at the flat bottom H. Therefore, it is hard to say that the facing angle α and the roof angle β in Fig. 3(a) are adequate to detect the defect present at the position of the flat bottom H.

Fig. 3(b) illustrates a state in which the transmitting vibrator 2 and the receiving vibrator 3 are provided at a roof angle β smaller than in Fig. 3(a) (or at a facing angle α larger than in Fig. 3(a)). At the facing angle α and the roof angle β in Fig. 3(b), the transmission axis 9 and the receiving axis 10 intersect just at the position on the flat bottom H of the flat bottom hole. Therefore, the facing angle α and the roof angle β in Fig. 3(b) are such that the sensitivity is the highest at the position of the defect present at the position of the flat bottom H and such that the position and shape of the defect can be detected precisely.

Fig. 3(c) illustrates a state in which the transmitting vibrator 2 and the receiving vibrator 3 are provided at a roof angle β even smaller (or a facing angle α even larger) than in Figs. 3(a) and 3(b). At the facing angle α and the roof angle β in Fig. 3(c), the transmission axis 9 and the receiving axis 10 intersect at a position deeper than the position of the flat bottom H of the flat bottom hole, and the depth where the sensitivity is the highest is deeper than the position of the defect present at the position of the flat bottom H. Therefore, the facing angle α and the roof angle β in Fig. 3(c) allow detection of the presence of the defect, but it is disadvantageous for precise detection of the position and shape of the defect.

The above-described ultrasonic probe 1 of this embodiment is characterized in having the structure of a so-called double crystal probe that performs a test with two vibrators, that is, the transmitting vibrator 2 for transmission only and the receiving vibrator 3 for receiving only. Further, the ultrasonic probe 1 of this embodiment is characterized in having the structure in which the transmitting vibrator 2 transmits ultrasound to form the focal line L on the test surface 7. According to the ultrasonic probe 1 of this embodiment, in addition to these characteristics, a surface echo of the ultrasound can be suppressed well and the sensitivity in the depth direction of the inspected article W can be properly adjusted at a desired depth by adequately setting the facing angle α and the roof angle β of the transmitting vibrator 2 and the receiving vibrator 3.

In the ultrasonic probe 1, when the facing angle α and the roof angle β are set, the distance from the transmitting vibrator 2 and the receiving vibrator 3 to the test surface 7 is different between the side of the acoustic isolation wall 8 and the side opposite from the acoustic isolation wall 8. The shape and curvature of the curved face of the transmitting vibrator 2 are preferably changed in the longitudinal direction of the transmitting vibrator 2 so that the transmitting vibrator 2 can form the focal line L on the test surface 7 even when the facing angle α and the roof angle β are thus set.

The sensitivity property of the ultrasonic probe 1 of this embodiment will be described with reference to Figs. 4(a), 4(b), and 4(c).

Fig. 4(a) shows the test sensitivity property of only a structure for transmitting ultrasound to form a focal line L on the test surface 7 with one vibrator that performs both transmission and receiving of the ultrasound (surface focusing), and Fig. 4(b) shows the test sensitivity property of a structure of a double crystal probe. Fig. 4(c) shows the test sensitivity property of the ultrasonic probe 1 of this embodiment in which the facing angle α and the roof angle β of the transmitting vibrator 2 and the receiving vibrator 3 are adequately set and the structure of surface focusing in Fig. 4(a) and the structure of the double crystal probe in Fig. 4(b) are combined.

As illustrated in Fig. 4(a), the test sensitivity property of surface focusing exhibits a good sensitivity property in a range directly under the surface of the inspected article W shown as an effective range, but the test sensitivity greatly decreases at a certain depth (depth).

Next, as illustrated in Fig. 4(b), the test sensitivity property of the structure of the double crystal probe exhibits a good sensitivity property in a range near the position of the axis intersection point at a certain depth shown as an effective range, but it is difficult to obtain a sufficient test sensitivity, for example, directly under the surface of the inspected article W.

Accordingly, referring to Fig. 4(c), the ultrasonic probe 1 of this embodiment exhibits a good sensitivity property in a range from a position directly under the surface of the inspected article W to a position near an axis intersection point at a certain depth, as shown by an effective range. Hence, the ultrasonic probe 1 can obtain a sufficient test sensitivity in a wide range in the depth direction of the inspected article W.

The advantages of the ultrasonic probe 1 of this embodiment will be specifically described with reference to Fig. 5. Fig. 5 is a graph showing the result of an experiment when a test was conducted on flat bottoms H of flat bottom holes of different depths with an ultrasonic probe 1 having a roof angle of 10° (facing angle of 170°) and an ultrasonic probe 1 having a roof angle of 12° (facing angle of 168°).

The experiment was conducted in the following procedure. First, five inspected articles W whose flat bottoms H of a diameter of 0.5 mm (φ 0.5) were formed at depths of 5 mm, 10 mm, 20 mm, 35 mm, and 50 mm, respectively, were prepared. Next, a test was conducted on the flat bottoms H of the flat bottom holes of the inspected articles W by the ultrasonic probe 1 having the roof angle of 10° and the ultrasonic probe 1 having the roof angle of 12°, and the ratios of obtained echoes to noise (S/N ratios) were found.

According to the graph of Fig. 5, the S/N ratio decreases as the depth of the flat bottom H of the flat bottom hole increases. Both the ultrasonic probe 1 having the roof angle of 10° and the ultrasonic probe 1 having the roof angle of 12° obtain a sufficient S/N ratio exceeding 18 dB in the depth range of the flat bottom H from 5 to 10 mm, and obtain an S/N ratio of 2 dB or more that can detect the defect even when the depth exceeds 40 mm.

Therefore, according to the ultrasonic probe 1 of this embodiment, it is possible to perform the test in a wide range in the depth direction of the inspected article W from a shallow flat bottom H having a depth of about 5 mm to a deep flat bottom H having a depth exceeding 40 mm. This matches the test sensitivity property shown in Fig. 4(c). Further, the ultrasonic probe 1 having the roof angle of 10° obtains a higher S/N ratio with respect to a deep flat bottom H having a depth exceeding 30 mm than the ultrasonic probe 1 having the roof angle of 12°. This shows the feature of the ultrasonic probe 1 of this embodiment in that high sensitivity is provided at a desired depth by adequately setting the roof angle β and the facing angle α, and matches the description with reference to Figs. 3(a), 3(b), and 3(c).

### [Second Embodiment]

A second embodiment of the present invention will be described with reference to Fig. 1 and Figs. 6(a) and 6(b).

Figs. 6(a) and 6(b) are schematic views illustrating a structure in which an ultrasonic probe 1a according to this embodiment is disposed on a curved surface of a groove G in an inspected article W. Fig. 6(a) is similar to Fig. 2(a), and is a schematic view illustrating the position and structure of the ultrasonic probe 1a in one side cross section orthogonal to a longitudinal direction (also referred to as an extending direction) of the groove G. Fig. 6(b) is a schematic view illustrating the position and structure of the ultrasonic probe 1a in another side (the other side) cross section orthogonal to the longitudinal direction (extending direction) of the groove G. That is, Fig. 6(a) is a view from a side of arrow A (transmitting part side) in Fig. 1, and Fig. 6(b) is a view from a side (receiving part side) opposite from arrow A in Fig. 1.

While the ultrasonic probe 1a of this embodiment has a structure substantially similar to that of the ultrasonic probe 1 of the first embodiment and includes a transmitting part, a receiving part, and a wedge 4, it is characterized in the structure of the receiving part in contrast to the ultrasonic probe 1 of the first embodiment. The structure of the receiving part in the ultrasonic probe 1a of this embodiment will be described below.

The receiving part of the ultrasonic probe 1a includes a receiving vibrator 3a that receives reflected ultrasound reflected inside the inspected article W and propagated to the curved surface.

As illustrated in Fig. 6(b), a receiving surface 6a of the receiving vibrator 3a for receiving ultrasound is curved in a substantially arcuate shape that is concave to a surface of the inspected article W, similarly to the transmitting vibrator 2 in the ultrasonic probe 1 of the first embodiment. The curve of the receiving surface 6a is provided to form a point F' (focal point F'), where the received ultrasound is focused, at a position corresponding to the curved surface (curved front surface) of the groove G in the cross section (view on arrow A in Fig. 1) orthogonal to the extending direction of the groove G. In other words, the receiving vibrator 3a is provided in the ultrasonic probe 1 so that the point F' (focal point F') serving as the focal point determined in correspondence with the substantially arcuate shape of the receiving surface 6a is formed at a position corresponding to the curved surface (curved front surface) of the groove G, that is, on a test surface 7 of the wedge 4.

The receiving vibrator 3a that thus forms the focal point F' forms a focal line L' on the test surface 7 in correspondence with the focal point F', similarly to a focal line L formed on the test surface 7 by a transmitting vibrator 2 in correspondence with a focal point F. Specifically, the receiving vibrator 3a forms, on the test surface 7 at a predetermined distance from the receiving surface 6a, a substantially straight focal line L' (focal point F') along the longitudinal direction of the receiving vibrator 3a perpendicular to the forming direction of the arc of the receiving surface 6a. Reflected ultrasound reflected inside the inspected article W and passed through the focal line L' (focal point F'), of ultrasound transmitted from a transmitting surface 5 of the transmitting vibrator 2, is received by the receiving surface 6a of the receiving vibrator 3a.

Here, it can also be considered that the focal line L' corresponds to a center axis of a cylinder, a column, or a cone (truncated cone) having a side surface whose part is formed by the receiving surface 6a of the receiving vibrator 3a shaped like a gutter or a half cylinder and that the focal point F' corresponds to one point on the center axis.

As described above, the receiving vibrator 3a of the ultrasonic probe 1a is formed so that the receiving surface 6a for receiving ultrasound is concavely curved in the substantially arcuate shape to form the focal point F', where received ultrasound is focused, at the position corresponding to the curved surface of the groove G. Here, the focal line L' corresponding to the focal point F' formed by the receiving surface 6a of the receiving vibrator 3a preferably coincides with an extension of the focal line L of the transmitting vibrator 2. When the focal line L' coincides with the extension of the focal line L, the receiving sensitivity can be increased in the ultrasonic probe 1a in which the facing angle α and the roof angle β are set, as illustrated in Fig. 2(b) of the first embodiment.

The receiving vibrator 3a is formed by a composite vibrator similar to the transmitting vibrator 2 in the transmitting part, and generates a voltage corresponding to the intensity and frequency of ultrasound received by the receiving surface 6a. While the receiving vibrator 3a may be formed by the composite vibrator shaped like a concave surface similar to the transmitting vibrator 2, as described above, it may be shaped by curving a planar piezoelectric element into a concave surface shape without being formed by the composite vibrator.

By thus structuring the receiving part of the ultrasonic probe 1a to achieve focus on the curved surface of the groove G, similarly to the transmitting part, reflected ultrasound passed through the point F', of ultrasound reflected by a defect inside the inspected article W, can be received considerably clearly. Thus, it is possible to obtain the ultrasonic probe 1a having high sensitivity near the surface of the inspected article W.

### [Example]

An example of the present invention will be described with reference to Figs. 1, 7, 8(a), and 8(b).

Fig. 7 is a conceptual view explaining the structure of a receiving part in an ultrasonic probe 1b according to this example. Figs. 8(a) and 8(b) are schematic views illustrating the structure when the ultrasonic probe 1b of this example is disposed on a curved surface of a groove G in an inspected article W. Fig. 8(a) is similar
to Figs. 2(a) and 6(a), and is a schematic view illustrating the position and structure of the ultrasonic probe 1b in one side cross section orthogonal to a longitudinal direction (also referred to as an extending direction) of the groove G. Fig. 8(b) is a schematic view illustrating the position and structure of the ultrasonic probe 1b in another side (the other side) cross section orthogonal to the longitudinal direction (extending direction) of the groove G. That is, Fig. 8(a) is a view from a side of arrow A in Fig. 1 (transmitting part side), and Fig. 8(b) is a view from a side (receiving part side) opposite from arrow A in Fig. 1.

While the ultrasonic probe 1b of this example has a structure substantially similar to those of the ultrasonic probe 1 of the first embodiment and the ultrasonic probe 1a of the second embodiment and includes a transmitting part, a receiving part, and a wedge 4, it is characterized in the structure of the receiving part in contrast to the ultrasonic probe 1 and the ultrasonic probe 1a. The structure of the receiving part in the ultrasonic probe 1b of this example will be described below.

The receiving part of the ultrasonic probe 1b includes a receiving vibrator 3b that receives reflected ultrasound reflected inside the inspected article W and propagated to the curved surface.

The concept of the structure of the receiving vibrator 3b in the receiving part will be described with reference to Fig. 7. While the receiving surface 6a of the receiving vibrator 3a in the second embodiment is curved in the substantially arcuate shape that is concave to the surface of the inspected article W, the receiving vibrator 3b of the receiving part in the ultrasonic probe 1b of this example has a receiving surface 6b curved in a substantially arcuate shape that is convex to the surface of the inspected article W. That is, the receiving surface 6b of the receiving vibrator 3b is curved in the substantially arcuate shape in a direction opposite to the receiving surface 6a of the receiving vibrator 3a in the second embodiment with respect to the surface of the inspected article W.

The receiving vibrator 3b is formed by a composite vibrator similar to a transmitting vibrator 2 in the transmitting part, and generates a voltage corresponding to the intensity and frequency of ultrasound received by the receiving surface 6b. While the receiving vibrator 3b may be formed by a composite vibrator that is shaped like a concave surface similarly to the transmitting vibrator 2, as described above, it may be shaped by curving a planar piezoelectric.element into the shape of a concave surface without being formed by the composite vibrator.

Although not illustrated in Fig. 7, a consideration will be given to a case in which the wedge 4 for holding the receiving vibrator 3b is formed of acrylic resin as a kind of resin and the inspected article W is formed by a steel material. In this case, ultrasound propagating from the receiving surface 6b of the receiving vibrator 3b into the steel material serving as the inspected article W via a test surface 7 of the wedge 4 is refracted by an interface between the test surface 7 and the steel material and is focused on a focal point FI in Fig. 7. However, since the receiving surface 6b of the receiving vibrator 3b does not transmit ultrasound, but receives ultrasound, it receives reflected ultrasound that is reflected inside the steel material serving as the inspected article W, passes through the focal point FI, and travels backward through the above-described propagation path from the receiving surface 6b to the inside of the steel material.

In this way, in the receiving vibrator 3b of this example, the receiving surface 6b is curved in the substantially arcuate shape that is convex to the surface of the inspected article W to form the focal point FI where the propagation path of ultrasound to be received is focused inside the inspected article W, and is disposed in the receiving part of the ultrasonic probe 1b. Ultrasound is refracted on the interface between the inspected article W and the wedge 4 by the difference between a velocity (sound velocity) V1 (2730 m/s) at which a longitudinal wave of the ultrasound propagates in the acrylic resin (wedge 4) and a velocity (sound velocity) V2 (5900 m/s) at which the longitudinal wave of the ultrasound propagates in the steel material (inspected article W). The focal point FI shows that the ultrasound is focused on this position owing to this refraction effect. That is, to realize the focal point FI inside the inspected article W, it is necessary to achieve the illustrated refraction of the ultrasound on the interface. For that purpose, in the wedge (wedge member) 4 provided with the receiving vibrator 3b, at least the test surface 7 to touch the inspected article W needs to be formed of a material having a sound velocity lower than the sound velocity (V2: 5900 m/s) of the inspected article W, for example, acrylic resin (VI: 2730 m/s),

Then, the position and depth of the focal point FI inside the inspected article W can be changed by changing the size of the curve of the receiving vibrator 3b and the distance between the receiving vibrator 3b and the test surface 7. Since the receiving vibrator 3b can clearly receive reflected ultrasound from the focal point FI and its vicinity, the shape and position of the receiving vibrator 3b are preferably determined according to the depth of the focal point FI that is predetermined in accordance with the depth of a defect to be detected.

With reference to Figs. 8(a) and 8(b), the structure of the ultrasonic probe 1b including the receiving vibrator 3b based on the above-described concept will be described.

As illustrated in Fig. 8(b), the receiving surface 6b of the receiving vibrator 3b for receiving ultrasound is curved in a substantially arcuate shape that is convex to the curve (test surface) of the groove G in the surface of the inspected article W. The curve of the receiving surface 6b is formed so that the focal point FI serving as the point where received ultrasound is focused is formed inside the inspected article W directly under the curved surface (curved front surface) of the groove G in a cross section (view on arrow A in Fig. 1) orthogonal to the extending direction of the groove G.

In other words, the receiving vibrator 3b is provided in the ultrasonic probe 1 while being held by the wedge (wedge member) 4 made of resin, such as acrylic resin, so that the focal point FI serving as the focal point determined in correspondence with the substantially arcuate shape of the receiving surface 6b is formed inside the inspected article W under the curved surface of the groove G.

The receiving vibrator 3b that forms the focal point FI in this way forms a focal line LI inside the inspected article W in correspondence with the focal point FI, similarly to a focal line L formed on the test surface 7 by the transmitting vibrator 2 in correspondence with a focal point F. Specifically, the receiving vibrator 3b forms the focal line LI substantially parallel to the focal line L inside the inspected article W in correspondence with the focal point FI where ultrasound to be received is focused and passes. Reflected ultrasound reflected inside the inspected article W and passed through the focal line LI (focal point FI), of ultrasound transmitted from the transmitting surface 5 of the transmitting vibrator 2, is received by the receiving surface 6b of the receiving vibrator 3b.

Here, similarly to the first embodiment illustrated in Fig. 2(b), a receiving axis 10 is set for the receiving vibrator 3b of this example. At this time, the focal point FI is preferably formed at an intersection point of a transmission axis 9 of the transmitting vibrator 2 and the receiving axis 10 that is determined by set facing and roof angles α and β. That is, the focal line LI preferably passes through the intersection point of the transmission axis 9 and the receiving axis 10.

As illustrated in Fig. 8(b) described above, in the ultrasonic probe 1b of this example, the sensitivity at a position deeper than the position near the surface of the inspected article W can be improved by forming the focal line LI (focal point FI) inside the inspected article W under the curved surface of the groove G in the cross section orthogonal to the extending direction of the groove G. Thus, the ultrasonic probe 1 of this example can clearly receive reflected ultrasound passed through the focal line LI (focal point FI) of ultrasound reflected by a defect inside the inspected article W. Further, when the focal point FI is formed at the intersection point of the transmission axis 9 of the transmitting vibrator 2 and the receiving axis 10 of the receiving vibrator 3b and the focal line LI passes through the focal point FI, high sensitivity can be achieved in a considerably wide range in the depth direction of the inspected article W, in addition to the above-described improvement of sensitivity.
It should be considered that the embodiments and the example disclosed herein are illustrative in all respects, but are not restrictive. In particular, in the embodiments and the example disclosed herein, the matters that are not expressly disclosed, for example, a running condition, an operating condition, various parameters, dimensions, weights, and volumes of the components do not deviate from the scope which is normally set by those skilled in the art, and employ values which can be normally and easily conceived by those skilled in the art.
For example, since the ultrasonic probes 1, 1a, and 1b described in conjunction with the above embodiments and the example are assumed to be used for the curved surface, such as a fillet, provided in the inspected article W, they adopt the test surface 7 curved with the curvature such as to follow the curved surface of the inspected article W. However, it is clear that advantages similar to the above-described advantages can be obtained even when the ultrasonic probes 1, 1a, and 1b of the above-described embodiments and the example adopt a flat test surface so as to be used for a flat surface of the inspected article W.
The present application is based on Japanese Patent Application (No. 2013-026712) filed on February 14, 2013 and Japanese Patent Application (No. 2013-223269) filed on October 28, 2013.

### Reference Signs List

1, 1a, 1b: ultrasonic probe2: transmitting vibrator3, 3a, 3b: receiving vibrator4: wedge (wedge member)5: transmitting surface6, 6a, 6b: receiving surface7: test surface8: acoustic isolation wall9: transmission axis10: receiving axis
- G:: groove
- H:: flat bottom
- W:: inspected article

## Claims

1. An ultrasonic probe (1; 1a) for detecting a defect inside an inspected article (W) having a groove (G) formed by a curved surface by transmitting ultrasound to the inspected article (W) and receiving reflected ultrasound reflected inside the inspected article (W), the ultrasonic probe (1; 1a) comprising a transmitting part having a transmitting vibrator (2) configured to transmit ultrasound toward the curved surface of the groove (G), a receiving part having a receiving vibrator (3; 3a) configured to receive reflected ultrasound reflected inside the inspected article (W) and propagated to the curved surface and a wedge (4) configured to hold the transmitting vibrator (2) and the receiving vibrator (3; 3a),
wherein the transmitting vibrator (2) has a transmitting surface (5) for generating ultrasound that is curved in an arcuate shape such as to be concave to the surface of the inspected article (W),
wherein the curvature of the concave transmitting surface (5) is such that a focal point of the transmitted ultrasound is formed at a position corresponding to the curved surface of the groove (G) in a cross section orthogonal to an extending direction of the groove (G), and
wherein the transmitting part and the receiving part are disposed to be adjacent to each other in the extending direction of the groove (G), and
wherein the wedge (4) has a test surface (7) having a cylindrical face shape that is convex to the outside of the wedge (4).

2. The ultrasonic probe (1; 1a) according to Claim 1, further comprising an acoustic isolation wall (8) configured to partition a space between the test surface (7), and the transmitting vibrator (2) and the receiving vibrator (3; 3a),
wherein the acoustic isolation wall (8) is disposed between the transmitting vibrator (2) and the receiving vibrator (3; 3a),
wherein the transmitting vibrator (2) and the receiving vibrator (3; 3a) are disposed while being inclined with respect to the curved surface of the groove (G) so that a facing angle formed by the transmitting surface (5) included in the transmitting vibrator (2) of the transmitting part and a receiving surface (6; 6a) included in the receiving vibrator (3; 3a) of the receiving part is an obtuse angle, and
the transmitting vibrator (2) and the receiving vibrator (3; 3a) are disposed to be inclined at the same angle with respect to the acoustic isolation wall (8) so that extensions of a transmission axis (9) and a receiving axis (10) intersect at one point.

3. The ultrasonic probe (1; 1a) according to Claim 2, wherein the curvature of the receiving surface (6; 6a) of the receiving vibrator (3; 3a) is such that a focal point of the received ultrasound is formed at a position corresponding to the curved surface of the groove (G) in the cross section orthogonal to the extending direction of the groove (G).

## Patentansprüche

1. Eine Ultraschallsonde (1; 1a) zum Erfassen eines Defekts in einem untersuchten Gegenstand (W) mit einer durch eine gekrümmte Oberfläche gebildete Nut (G), indem Ultraschall auf den untersuchten Gegenstand (W) übertragen wird und reflektierter Ultraschall empfangen wird, der innerhalb des untersuchten Gegenstands (W) reflektiert wird, wobei die Ultraschallsonde (1; 1a) ein Sendeteil umfasst mit einem sendenden Vibrator (2), der konfiguriert ist, um Ultraschall in Richtung der gekrümmten Oberfläche der Nut (G) zu senden, ein Empfangsteil mit einem empfangenden Vibrator (3; 3a), der konfiguriert ist, um reflektierten Ultraschall zu empfangen, der innerhalb des untersuchten Gegenstands (W) reflektiert und auf die gekrümmte Oberfläche übertragen wird, und einen Keil (4), der konfiguriert ist, um den sendenden Vibrator (2) und den empfangenden Vibrator (3; 3a) zu halten,
wobei der sendende Vibrator (2) eine Sendeoberfläche (5) aufweist zum Erzeugen von Ultraschall, die in einer bogenförmigen Form gekrümmt ist, sodass sie zur Oberfläche des untersuchten Artikels (W) konkav ist,
wobei die Krümmung der konkaven Sendeoberfläche (5) derart ist, dass ein Brennpunkt des übertragenen Ultraschalls an einer Position gebildet wird, die der gekrümmten Oberfläche der Nut (G) in einem Querschnitt orthogonal zu einer Erstreckungsrichtung der Nut (G) entspricht, und
wobei das Sendeteil und das Empfangsteil so angeordnet sind, dass sie in der Längsrichtung der Nut (G) aneinander angrenzen, und
wobei der Keil (4) eine Prüffläche (7) mit einer zylindrischen Flächenform aufweist, die zur Außenseite des Keils (4) konvex ist.

2. Die Ultraschallsonde (1; 1a) nach Anspruch 1, ferner umfassend eine akustische Isolationswand (8), die konfiguriert ist, um einen Raum zwischen der Prüffläche (7) und dem sendenden Vibrator (2) und dem empfangenden Vibrator (3; 3a) zu unterteilen,
wobei die akustische Isolationswand (8) zwischen dem sendenden Vibrator (2) und dem empfangenden Vibrator (3; 3a) angeordnet ist,
wobei der sendende Vibrator (2) und der empfangende Vibrator (3; 3a) angeordnet sind, wobei sie in Bezug auf die gekrümmte Oberfläche der Nut (G) geneigt sind, sodass ein Frontwinkel, der durch die Sendeoberfläche (5), die im sendenden Vibrator (2) des Sendeteils enthalten ist, und eine Empfangsfläche (6; 6a), die im empfangenden Vibrator (3; 3a) des Empfangsteils enthalten ist, gebildet wird, ein stumpfer Winkel ist, und
der sendende Vibrator (2) und der empfangende Vibrator (3; 3a) so angeordnet sind, dass sie im gleichen Winkel zur akustischen Isolationswand (8) geneigt sind, sodass sich Verlängerungen einer Sendeachse (9) und einer Empfangsachse (10) an einem Punkt schneiden.

3. Die Ultraschallsonde (1; 1a) nach Anspruch 2, wobei die Krümmung der Empfangsfläche (6; 6a) des empfangenden Vibrators (3; 3a) derart ist, dass ein Brennpunkt des empfangenen Ultraschalls an einer Position gebildet wird, die der gekrümmten Oberfläche der Nut (G) im Querschnitt orthogonal zur Erstreckungsrichtung der Nut (G) entspricht.

## Revendications

1. Une sonde à ultrasons (1 ; 1a) pour détecter un défaut à l'intérieur d'un article inspecté (W) présentant une rainure (G) formée par une surface courbe, en transmettant des ultrasons à l'article inspecté (W) et en recevant des ultrasons réfléchis qui sont réfléchis à l'intérieur de l'article inspecté (W), la sonde à ultrasons (1 ; 1a) comprenant une partie émettrice ayant un vibrateur émetteur (2) configuré pour transmettre des ultrasons vers la surface incurvée de la rainure (G), une partie réceptrice ayant un vibrateur récepteur (3 ; 3a) configuré pour recevoir des ultrasons réfléchis qui sont réfléchis à l'intérieur de l'article inspecté (W) et propagés vers la surface incurvée, et un coin (4) configuré pour tenir le vibrateur émetteur (2) et le vibrateur récepteur (3 ; 3a),
sachant que le vibrateur émetteur (2) présente une surface d'émission (5) pour la génération d'ultrasons qui est incurvée dans une forme arquée de manière à être concave vers la surface de l'article inspecté (W),
sachant que la courbure de la surface d'émission concave (5) est telle qu'un point focal des ultrasons transmis est formé à une position correspondant à la surface incurvée de la rainure (G) dans une section transversale orthogonale à une direction d'extension de la rainure (G), et
sachant que la partie émettrice et la partie réceptrice sont disposées pour être adjacentes l'une à l'autre dans la direction d'extension de la rainure (G), et
sachant que le coin (4) présente une surface d'essai (7) ayant une forme de face cylindrique qui est convexe vers l'extérieur du coin (4).

2. La sonde à ultrasons (1 ; 1a) d'après la revendication 1, comprenant en outre une paroi d'isolation acoustique (8) configurée pour diviser un espace entre la surface d'essai (7), et le vibrateur émetteur (2) et le vibrateur récepteur (3 ; 3a),
sachant que la paroi d'isolation acoustique (8) est disposée entre le vibrateur émetteur (2) et le vibrateur récepteur (3 ; 3a),
sachant que le vibrateur émetteur (2) et le vibrateur récepteur (3 ; 3a) sont disposés en étant inclinés par rapport à la surface incurvée de la rainure (G) de manière qu'un angle de face (*facing angle*) formé par la surface d'émission (5) comprise dans le vibrateur émetteur (2) de la partie émettrice et une surface de réception (6 ; 6a) comprise dans le vibrateur récepteur (3 ; 3a) de la partie réceptrice est un angle obtus, et que
le vibrateur émetteur (2) et le vibrateur récepteur (3 ; 3a) sont disposés de manière à être inclinés selon le même angle par rapport à la paroi d'isolation acoustique (8) de manière que les extensions d'un axe de transmission (9) et d'un axe récepteur (10) se coupent en un point.

3. La sonde à ultrasons (1 ; 1a) d'après la revendication 2, sachant que la courbure de la surface de réception (6 ; 6a) du vibrateur récepteur (3 ; 3a) est telle qu'un point focal des ultrasons reçus est formé à une position correspondant à la surface courbe de la rainure (G) dans la section transversale orthogonale à la direction d'extension de la rainure (G).
